# EUROPÄISCHE PATENTANMELDUNG

(11) **EP 3 116 110 A1**
(43) Veröffentlichungstag der Anmeldung: **11.01.2017**
(21) Anmeldenummer: 15176273.9
(22) Anmeldetag: 10.07.2015
(51) Int. Cl.: H02K 19/36, H02K 19/38, H02K 7/00, H02K 11/042

(54) **ELEKTRISCHE ROTIERENDE MASCHINE MIT INTEGRIERTER ERREGERMASCHINE**

(71) Anmelder: Siemens Aktiengesellschaft, 80333 München (DE)
(72) Erfinder: Cepek, Thomas, 12487 Berlin (DE); Grabau, Wolfram, 10999 Berlin (DE); Lück, Franz, 12307 Berlin (DE)

(57) **Zusammenfassung**

Die Erfindung betrifft eine elektrische rotierende Maschine (1), insbesondere eine Synchronmaschine, mit einem Rotor (3) und einer Erregermaschine (2). Um eine, im Vergleich zum Stand der Technik, optimierte Rotordynamik zu erreichen und eine einfache und effiziente Fertigung zu ermöglichen, wird vorgeschlagen, dass die Erregermaschine (2) einen einzigen Tragkörper (10) mit einem Befestigungsflansch (12) aufweist, wobei der Tragkörper (10) über den Befestigungsflansch (12) direkt an einem axialen Ende des Rotors (3) angeflanscht ist.

## Beschreibung

Die Erfindung betrifft eine elektrische rotierende Maschine, insbesondere eine Synchronmaschine, mit einem Rotor und einer Erregermaschine.

Für den Betrieb von synchronen elektrischen Maschinen ist die Ausbildung eines Erregerfeldes notwendig. Dieses kann bei sehr großen Maschinen mit einer Leistung von mehr als zehn Megawatt beispielsweise durch eine Erregermaschine erzeugt werden. Ist diese auf dem Rotor der elektrischen Maschine, welche sich beispielswiese mit einer Drehzahl von 1000 bis 3000 U/min dreht, montiert, beeinflussen ihr Gewicht und ihre Schwerpunktlage die Rotordynamik der elektrischen Maschine.

Üblicherweise besteht eine auf dem Rotor montierte Erregermaschine aus der Erregerwicklung und den Gleichrichterkomponenten. Bei speziellen Anlaufbedingungen kann auch noch ein Widerstand Bestandteil der Erregermaschine sein. Die Komponenten werden einzeln auf Tragkörper montiert und die Tragkörper mit den Komponenten werden dann nacheinander auf den Rotor aufgeschrumpft. Bei einem Schrumpfverfahren wird beispielsweise der Tragkörper um einige hundert Grad Celsius, erhitzt, wodurch sich der Innendurchmesser des Tragkörpers aufgrund von Wärmeausdehnung, welche auch thermische Expansion genannt wird, vergrößert. Der durch die thermische Expansion vergrößerte Tragkörper wird im erhitzten Zustand über den Rotor gestülpt. Beim Abkühlen des Tragkörpers findet eine Wärmeschrumpfung, welche auch thermische Kontraktion genannt wird, statt wodurch der Tragkörper die vorherige Größe wieder bekommt und mechanisch fest mit dem Rotor verbunden ist.

Aus der europäischen Patentanmeldung EP 2 551 999 A1 ist eine elektrische Maschine bekannt, welche einen Ständer, einen Rotor, der mit dem Ständer magnetisch zusammenwirkt, und eine Erregerwicklung aufweist, wobei die elektrische Maschine eine erste Wicklung, die an dem Rotor befestigt ist, und einen Gleichrichter, der an dem Rotor befestigt ist, aufweist. Zudem ist der Gleichrichter eingangsseitig an die erste Wicklung und ausgangsseitig an die Erregerwicklung des Rotors angeschlossen. Die elektrische Maschine besitzt ferner eine zweite Wicklung, die konzentrisch mit der ersten Wicklung und drehfest mit dem Ständer verbunden ist.

Aus dem europäischen Patent EP 0 687 396 B1 ist eine bürstenlose Synchronmaschine mit einer Erregermaschine bekannt, deren Felderregerwicklung über einen an eine gesonderte Hilfswicklung im Stator der Hauptmaschine angeschlossenen Regler gespeist ist.

Der Erfindung liegt die Aufgabe zugrunde, eine elektrische rotierende Maschine mit einem Rotor und einer Erregermaschine anzugeben, welche, im Vergleich zum Stand der Technik, eine optimierte Rotordynamik aufweist und einfach und effizient zu fertigen ist.

Diese Aufgabe wird durch eine elektrische rotierende Maschine, insbesondere eine Synchronmaschine, mit einem Rotor und einer Erregermaschine dadurch gelöst, dass die Erregermaschine einen einzigen Tragkörper mit einem Befestigungsflansch aufweist, wobei der Tragkörper über den Befestigungsflansch direkt an einem axialen Ende des Rotors angeflanscht ist.

Das Anflanschen kann beispielsweise mit Schrauben erfolgen, welche ein axiales Ende des Rotors mit einem axialen Ende des Tragkörpers verbinden. Durch eine derartige Verbindung des Rotors mit einem einzigen Tragkörper wird die Rotordynamik im Vergleich zu nacheinander auf den Rotor aufgeschrumpften Komponenten durch eine verbesserte Gewichtsverteilung und eine günstigere Lage des Schwerpunkts signifikant verbessert. Weiterhin ist ein einzelner Tragkörper, welcher beispielsweise durch eine Schraubverbindung am Rotor angeflanscht wird, leichter und effizienter zu fertigen, zu montieren und zu warten als mehrere Einzelkomponenten, welche durch aufwendige Schrumpfverbindungen montiert werden. Weiterhin werden insbesondere durch die effizientere Fertigung und durch die einfachere Montage Kosten eingespart. Ein weiterer Vorteil ist die Möglichkeit die komplette Erregermaschine separat zu wuchten und ihre Herstellung aus der Fertigungskette des Rotors herauszuziehen. Eine derartige parallele Fertigung reduziert die Fertigungsdurchlaufzeit zusätzlich.

Vorteilhaft ist die Erregermaschine als integrierte Erregermaschine ausgeführt. Bei der integrierten Erregermaschine sind alle Komponenten auf einem einzigen Tragkörper montiert. Durch die Integration der Komponenten auf einem einzigen Tragkörper verkleinert sich die Erregermaschine im Vergleich zu Komponenten, welche auf mehreren Tragkörpern befestigt sind. Weiterhin wird die Rotordynamik durch die Integration verbessert.

Auf besonders vorteilhafter Weise weist die integrierte Erregermaschine einen Gleichrichter und einen Widerstand auf, wobei der Gleichrichter und der Widerstand direkt auf dem Tragkörper befestigt sind. Dies ist vorteilhaft, da durch die Integration des Gleichrichters und des Widerstands auf dem Tragkörper kürzere Verbindungen zwischen den Komponenten möglich sind, was Kosten einspart. Weiterhin lässt sich die Verbindung der Komponenten aus der Fertigungskette des Rotors herauszuziehen, was eine effizientere Fertigung ermöglicht.

Bei einer bevorzugten Ausführungsform ist der Widerstand der integrierten Erregermaschine als Widerstandsspule ausgeführt, welche auf dem Tragkörper gewickelt ist. Der Widerstand lässt sich durch die Länge, den Querschnitt und den spezifischen Widerstand des Drahtes der Spule skalieren. Der Durchmesser des Widerstandsdrahtes der Widerstandsspule kann an den maximal durch den Widerstand fließenden Strom angepasst werden. Dies ermöglicht eine einfache und effektive Kühlung des Widerstands und ist platzsparend.

Bei einer weiteren vorteilhaften Ausgestaltung weist die elektrische rotierende Maschine ein Gehäuse mit einer Primärwicklung auf, wobei die integrierte Erregermaschine ein Blechpaket mit einer Sekundärwicklung aufweist, welches auf dem Tragkörper der integrierten Erregermaschine befestigt ist, wobei die Primärwicklung und die Sekundärwicklung über einen Luftspalt magnetisch gekoppelt sind und einen Transformator bilden. Über den Transformator wird die von der Erregermaschine benötige elektrische Leistung kontaktlos über den Luftspalt auf den rotierenden Teil der elektrischen rotierenden Maschine übertragen. Bürsten oder Schleifringe sind deshalb nicht erforderlich.

Bei einer bevorzugten Ausführungsform sind die Primärwicklung und die Sekundärwicklung mehrphasig ausgebildet sind und bilden einen mehrphasigen Transformator. Aus der mehrphasigen Ausbildung des Transformators ergibt sich ein Minimum an Aufwand für die Übertragung der elektrischen Leistung für die Erregermaschine.

Vorteilhaft ist die Primärwicklung des Transformators zur Verbindung mit einer Wechselstromquelle vorgesehen. Daraus ergibt sich ein Minimum an Aufwand für die Übertragung der elektrischen Leistung für die Erregermaschine.

Bei einer weiteren vorteilhaften Ausgestaltung weist der Rotor Rotorwicklungen auf, wobei die Sekundärwicklung des Transformators über den Gleichrichter mit den Rotorwicklungen des Rotors verbunden ist. Die Rotorwicklungen, durch welche ein Erregerstrom fließt, erzeugen ein Magnetfeld im Rotor. Sie werden vom Gleichrichter gespeist, welcher die über den Transformator übertragene Wechselspannung gleichrichtet. Diese Ausgestaltung ermöglicht es die elektrische rotierende Maschine mit dem jeweils optimalen Erregerstrom zu betreiben.

Im Folgenden wird die Erfindung anhand der in den Figuren dargestellten Ausführungsbeispiele näher beschrieben und erläutert.

Es zeigen:
- FIG 1: einen Längsschnitt einer Erregermaschine nach dem Stand der Technik,
- FIG 2: einen Längsschnitt einer integrierten Erregermaschine und
- FIG 3: einen Längsschnitt eines Teils einer elektrischen rotierenden Maschine mit einer integrierten Erregermaschine.

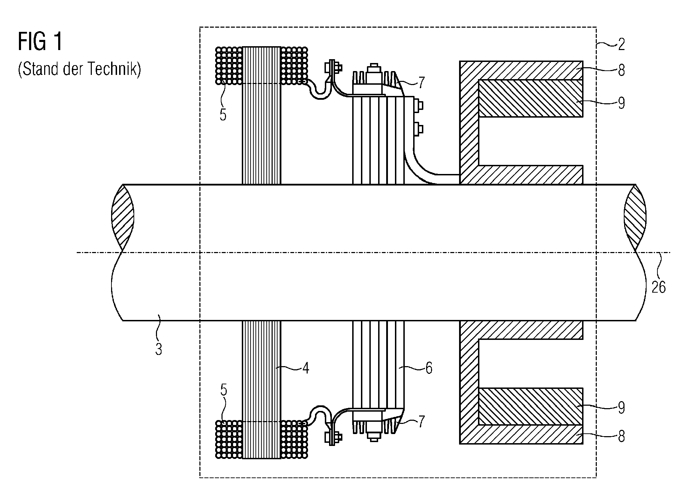

FIG 1 zeigt einen Längsschnitt einer Erregermaschine 2 nach dem Stand der Technik. Die Erregermaschine 2 weist einen Gleichrichter 7 auf, welcher auf einem Gleichrichterrad 6 befestigt ist. Weiterhin weist die Erregermaschine 2 ein Widerstandsrad 8 auf, auf welchem ein für spezielle Anlaufbedingungen erforderlicher Widerstand 9 befestigt ist. Ferner weist die Erregermaschine 2 ein Blechpaket 4 mit Sekundärwicklungen 5 auf. Das Gleichrichterrad 6, das Widerstandsrad 8 und das Blechpaket 4 fungieren hierbei als Tragkörper und werden einzeln und nacheinander auf den Rotor 3 geschrumpft. Bei dem Schrumpfverfahren werden die Tragkörper um einige hundert Grad Celsius, erhitzt, wodurch sich der Innendurchmesser der Tragkörper aufgrund von Wärmeausdehnung, welche auch thermische Expansion genannt wird, vergrößert. Die durch die thermische Expansion vergrößerten Tragkörper werden im erhitzten Zustand über den Rotor 3 gestülpt. Beim Abkühlen der Tragkörper findet eine Wärmeschrumpfung statt, welche auch thermische Kontraktion genannt wird, wodurch die Tragkörper die vorherige Größe wieder annehmen und mechanisch fest mit dem Rotor verbunden sind. Der Rotor 3 ist um eine Rotationsachse 26 drehbar. Die Sekundärwicklungen 5 sind mit dem Gleichrichter 7 über eine erste Verbindung 28 kontaktiert. Der Gleichrichter 7 ist mit dem Widerstand 9 über eine zweite Verbindung 29 kontaktiert.

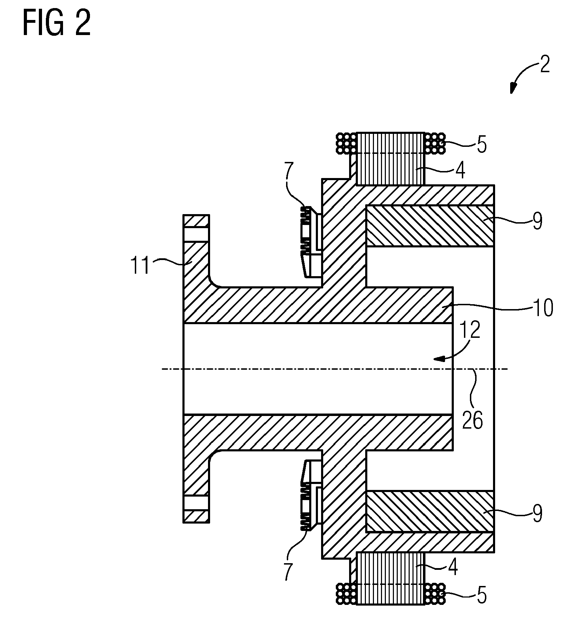

FIG 2 zeigt einen Längsschnitt einer integrierten Erregermaschine 30. Die Sekundärwicklungen 5 mit dem Blechpaket 4, der Gleichrichter 7 und der Widerstand 9 sind direkt mit dem Tragkörper 10 verbunden. Durch die Integration der Sekundärwicklungen 5 mit dem Blechpaket 4, des Gleichrichters 7 und des Widerstands 9 auf einem einzigen Tragkörper 10 verkleinert sich die Erregermaschine 2 im Vergleich zum in FIG 1 dargestellten Stand der Technik. Weiterhin wird die die Rotordynamik durch die Integration verbessert.

Der Tragkörper weist einen Flansch 11 und einen Kabelkanal 12 auf. Der Flansch 11 dient dazu den Tragkörper 10 direkt an ein axiales Ende des Rotors 3 anzuflanschen. Der Kabelkanal dient zur Versorgung des Rotors 3 mit elektrischer Energie.

Das Anflanschen des Tragkörpers 10 kann beispielsweise mit Schrauben erfolgen. Durch eine derartige Verbindung wird die Rotordynamik im Vergleich zur in FIG 1 dargestellten Ausführungsform nach dem Stand der Technik durch eine verbesserte Gewichtsverteilung und eine günstigere Lage des Schwerpunkts signifikant verbessert. Weiterhin ist ein einzelner Tragkörper 10, welcher beispielsweise durch eine Schraubverbindung am Rotor angeflanscht wird, leichter und effizienter zu fertigen, zu montieren und zu warten als mehrere Einzelkomponenten, welche durch aufwendige Schrumpfverbindungen montiert werden. Weiterhin werden insbesondere durch die effizientere Fertigung und durch die einfachere Montage Kosten eingespart. Ein weiterer Vorteil ist die Möglichkeit die komplette integrierte Erregermaschine 30 separat zu wuchten. Eine derartige parallele Fertigung reduziert die Fertigungsdurchlaufzeit zusätzlich.

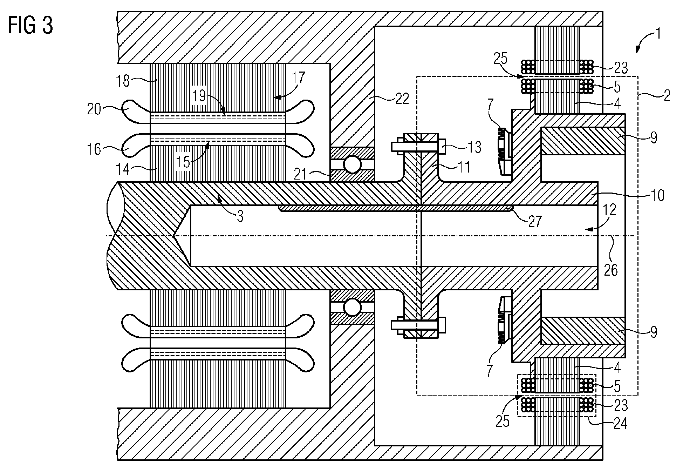

FIG 3 zeigt einen Längsschnitt eines Teils einer elektrischen rotierenden Maschine 1 mit einer integrierten Erregermaschine 30. Die die integrierte Erregermaschine 30 weist einen einzigen Tragkörper 10 mit einem Befestigungsflansch 12 auf. Der Tragkörper 10 ist über den Befestigungsflansch 12 direkt am axialen Ende des Rotors 3 angeflanscht. Dabei ist der Befestigungsflansch 12 des Tragkörpers 10 über eine Schraubverbindung 13 mit dem Rotor 3 verbunden. Die Sekundärwicklungen 5 mit dem Blechpaket 4, der Gleichrichter 7 und der Widerstand 9 sind, wie in FIG 2 gezeigt, direkt mit dem Tragkörper 10 der integrierten Erregermaschine 30 verbunden.

Der Rotor 3 weist ein Rotorblechpaket 14 auf, durch welches Rotorwicklungen 15 verlaufen, wobei die Rotorwicklungen 15 Rotorwickelköpfe 16 an den axialen Enden des Rotorblechpakets 14 bilden. Das Rotorblechpaket 14 mit den Rotorwicklungen 15 ist von einem Stator 17 umgeben, welcher ein Statorblechpaket 18 aufweist. Durch das Statorblechpaket 18 verlaufen Statorwicklungen 19, welche an den axialen Enden des Statorblechpakets 18 Statorwickelköpfe 20 bilden. Der Stator 17 ist mit dem Gehäuse 22 der elektrischen rotierenden Maschine 1 verbunden. Über Lager 21 ist der rotierende Teil der elektrischen rotierenden Maschine 1, welcher den Rotor 3 und die integrierte Erregermaschine 30 aufweist, mit dem Gehäuse 22 der elektrischen rotierenden Maschine 1 verbunden. Das Gehäuse 22 weist weiterhin Primärwicklungen 23 auf, welche mit den Sekundärwicklungen 5 der integrierten Erregermaschine 30 über einen Luftspalt 25 magnetisch gekoppelt sind und einen Transformator 24 bilden.

Die Primärwicklungen 23 sind mit einer Drehstromquelle 31 verbunden, welche die elektrische Leistung für die integrierte Erregermaschine 30 bereitstellt. Der Strom aus der Drehstromquelle 31 wird von den Primärwicklungen 23 über den Luftspalt 25 und die Sekundärwicklungen 5 kontaktlos auf den rotierenden Teil der elektrischen rotierenden Maschine 1 übertragen. Durch die berührungslose Übertragung sind keine Bürsten oder Schleifringe erforderlich. Die Sekundärwicklungen 5 sind mit dem Wechselstromeingang des Gleichrichters 7 verbunden, welcher aus dem übertragenen Drehstromsignal ein Gleichstromsignal erzeugt. Bei speziellen Anlaufbedingungen ist ein Widerstand 9 erforderlich, welcher als Widerstandsspule ausgeführt und auf dem Tragkörper 10 gewickelt ist. Der Widerstand 9 lässt sich durch die Länge, den Querschnitt und den spezifischen Widerstand des Drahtes der Spule skalieren. Der Durchmesser des Widerstandsdrahtes der Widerstandsspule kann an den maximal durch den Widerstand 9 fließenden Strom angepasst werden. Dies ermöglicht eine einfache und effektive Kühlung des Widerstands 9 und ist platzsparend. Der Gleichrichter ist an seinem Gleichstromausgang über ein Kabel 27, welches im Kabelkanal 27 des Rotors 3 verläuft, mit den Rotorwicklungen 15 der der elektrischen rotierenden Maschine 1 verbunden. Diese erzeugt ein Magnetfeld im Rotor.

Zusammenfassend betrifft die Erfindung eine elektrische rotierende Maschine 1, insbesondere eine Synchronmaschine, mit einem Rotor 3 und einer Erregermaschine 2. Um eine, im Vergleich zum Stand der Technik, optimierte Rotordynamik zu erreichen und eine einfache und effiziente Fertigung zu ermöglichen, wird vorgeschlagen, dass die Erregermaschine 2 einen einzigen Tragkörper 10 mit einem Befestigungsflansch 12 aufweist, wobei der Tragkörper 10 über den Befestigungsflansch 12 direkt an einem axialen Ende des Rotors 3 angeflanscht ist.

## Patentansprüche

1. Elektrische rotierende Maschine (1), insbesondere eine Synchronmaschine, mit einem Rotor (3) und einer Erregermaschine (2), wobei die Erregermaschine (2) einen einzigen Tragkörper (10) mit einem Befestigungsflansch (12) aufweist und wobei der Tragkörper (10) über den Befestigungsflansch (12) direkt an einem axialen Ende des Rotors (3) angeflanscht ist.

2. Elektrische rotierende Maschine (1) nach Anspruch 1, wobei die Erregermaschine (2) als integrierte Erregermaschine (30) ausgeführt ist.

3. Elektrische rotierende Maschine (1) nach Anspruch 2, wobei die integrierte Erregermaschine (30) einen Gleichrichter (7) und einen Widerstand (9) aufweist, wobei der Gleichrichter (7) und der Widerstand (9) direkt auf dem Tragkörper (10) befestigt sind.

4. Elektrische rotierende Maschine (1) nach Anspruch 3, wobei der Widerstand (9) der integrierten Erregermaschine (30) als Widerstandsspule ausgeführt ist, welche auf dem Tragkörper (10) gewickelt ist.

5. Elektrische rotierende Maschine (1) nach einem der Ansprüche 2 bis 4,
wobei die elektrische rotierende Maschine (1) ein Gehäuse (22) mit einer Primärwicklung (23) aufweist,
wobei die integrierte Erregermaschine (30) ein Blechpaket (4) mit einer Sekundärwicklung aufweist (5), welches auf dem Tragkörper (10) der integrierten Erregermaschine (30) befestigt ist,
wobei die Primärwicklung (23) und die Sekundärwicklung (5) über einen Luftspalt (25) magnetisch gekoppelt sind und einen Transformator (24) bilden.

6. Elektrische rotierende Maschine (1) nach Anspruch 5, wobei die Primärwicklung (23) und die Sekundärwicklung (5) mehrphasig ausgebildet sind und einen mehrphasigen Transformator (24) bilden.

7. Elektrische rotierende Maschine (1) nach einem der Ansprüche 5 oder 6,
wobei die Primärwicklung (23) des Transformators (24) zur Verbindung mit einer Wechselstromquelle 31 vorgesehen ist.

8. Elektrische rotierende Maschine (1) nach einem der Ansprüche 5 bis 7,
wobei der Rotor (3) Rotorwicklungen (15) aufweist und
wobei die Sekundärwicklung (5) des Transformators (24) über den Gleichrichter (7) mit den Rotorwicklungen (15) des Rotors (3) verbunden ist.
